# EUROPÄISCHE PATENTSCHRIFT

(11) **EP 1 327 927 B1**
(45) Veröffentlichungstag und Bekanntmachung des Hinweises auf die Patenterteilung: **02.08.2006**
(21) Anmeldenummer: 02028353.7
(22) Anmeldetag: 17.12.2002
(51) Int. Cl.: G05G 1/14, B60K 26/02

(54) **Fahrpedaleinheit**
Accelerator pedal unit for vehicles
Ensemble de pédales d'accélérateur pour véhicules

(30) Priorität: 14.01.2002 DE 10201210
(43) Veröffentlichungstag der Anmeldung: 16.07.2003
(73) Patentinhaber: SIEMENS AKTIENGESELLSCHAFT, 80333 München (DE)
(72) Erfinder: Kohlen, Peter, 61267 Neu-Anspach (DE); Reimann, Christian, 61273 Wehrheim (DE); von Willich, Joachim, 65618 Selters (DE)

(56) Entgegenhaltungen:
- EP-A- 0 617 674
- WO-A-00/05093
- WO-A-00/56566
- DE-A- 19 620 929
- FR-A- 2 728 837
- PATENT ABSTRACTS OF JAPAN vol. 017, no. 686 (M-1529), 15. Dezember 1993 (1993-12-15) & JP 05 231194 A (NIPPONDENSO CO LTD), 7. September 1993 (1993-09-07)

## Beschreibung

Die Erfindung bezieht sich auf eine Fahrpedaleinheit, bestehend aus einem Pedal, einer mit dem Pedal verbundenen Rückstellfeder, einem an den Pedal angeordneten Koppelelement, das mit einem Sicherheitselement verbunden ist und an dem an seinem dem Pedal abgewandten Ende ein Rollband angeordnet ist, das an einer Wickeltrommel befestigt ist, die über eine Drehachse mit einem Getriebe verbunden ist, das an einen Elektromotor angeschlossen ist.

Fahrpedaleinheiten dieser Art sind bekannt (siehe z.B. FR-A-2 728 837). Die vorteilhafte Anordnung eines Rollbandes, das über weitere Elemente mit einem Elektromotor verbunden ist, der einer Tretbewegung gegen das Pedal entgegenwirkt, ermöglicht die Einstellung eines zusätzlichen Tretwiderstandes, um dem Fahrer eines Kraftfahrzeugs zusätzliche Informationen über die gegenwärtige Fahrsituation zu vermitteln. Bei diesen Fahrpedaleinheiten ist es jedoch nachteilig, dass es zu Schwankungen bei den Drehmomenten über den zeitlichen Verlauf kommt. Man spricht in diesem Zusammenhang von der sogenannten Drehstromwelligkeit, die sich bei der Bedienung des Pedals störend auswirkt.

In der EP 0 617 674 wird eine Fahrpedaleinheit beschrieben, bei der sich keine nachteilige Drehmomentwelligkeit einstellt. Dabei ist jedoch nachteilig, dass ein zusätzlicher Widerstand beim Treten des Pedals nicht eingestellt werden kann. Die Rückstellkraft F wird dabei von einem Servomotor ausgeübt.

Der Erfindung liegt die Aufgabe zugrunde, eine Fahrpedaleinheit zu schaffen, bei der auf relativ einfacher Weise eine Drehmomentwelligkeit weitgehendst vermieden werden kann. Dabei soll kein zusätzlicher Platzbedarf erforderlich sein.

Die der Erfindung zugrundeliegende Aufgabe wird dadurch gelöst, dass als Getriebe ein Reibradgetriebe angeordnet ist. Durch die erfindungsgemäße Anordnung eines Reibradgetriebes in der Fahrpedaleinheit läßt sich eine Drehmomentwelligkeit weitgehendst vermeiden. Dem Fahrer wird somit ein gleichmäßiges Treten ohne jedwede Ruckelbewegungen ermöglicht. Als Sicherheitselement kommen dabei beispielsweise Rutschkupplungen zum Einsatz. Als Rollband werden in besonders vorteilhafter Weise blattförmige Metallbänder verwendet. Es ist jedoch auch möglich, einen entsprechenden Seilzug vorzusehen.

Eine bevorzugte Ausgestaltung der Erfindung besteht darin, dass als Reibradgetriebe ein Planetenradgetriebe angeordnet ist. Dadurch läßt sich in besonders vorteilhafter Weise der erforderliche Bauraum verkleinern, so dass die Fahrpedaleinheit besonders kompakt gestaltet werden kann.

Gemäß einer weiteren bevorzugten Ausgestaltung der Erfindung ist als Sicherheitselement eine Überhubelement angeordnet. Dabei handelt es sich beispielsweise um einen Federstab, bei dem eine Feder vorgespannt ist. Die Anordnung eines solchen Überhubelements vereinfacht die konstruktive Ausgestaltung der Fahrpedaleinheit und läßt sich nahezu wartungsfrei betreiben.

Nach einer weiteren bevorzugten Ausgestaltung der Erfindung ist der Elektromotor mit einem Steuergerät zur Leistungssteuerung verbunden. Somit läßt sich die Leistung des Elektromotors in Abhängigkeit von verschiedenen Parametern steuern und den aktuellen Gegebenheiten anpassen.

Eine weitere Ausgestaltung der Erfindung besteht darin, dass das Steuergerät mit einem Positionssensor in Verbindung steht, der direkt die Position des Pedals erfaßt. Der Winkelsensor versorgt das Steuergerät mit den notwendigen Informationen über die gegenseitige Position des Pedals, so dass die Leistung des Elektromotors direkt in Abhängigkeit von der Position des Pedals gesteuert werden kann.

Nach einer weiteren Ausgestaltung der Erfindung ist vorgesehen, dass das Steuergerät mit einem anderen Positionssensor in Verbindung steht, der direkt die Position der Wickeltrommel erfaßt. Dieser andere Winkelsensor liefert somit die erforderlichen Informationen über die Position der Wickeltrommel direkt zum Steuergerät, so dass auch hier eine Anpassung der Leistung des Elektromotors in Abhängigkeit von der Position des Pedals erfolgen kann.

Eine weitere bevorzugte Ausgestaltung der Erfindung besteht darin, dass als Elektromotor ein schräg genuteter Elektromotor eingesetzt wird. Auf diese Weise läßt sich eine Drehstromwelligkeit nahezu vollständig vermeiden, was die Bedienfreundlichkeit des Pedals nahezu optimiert.

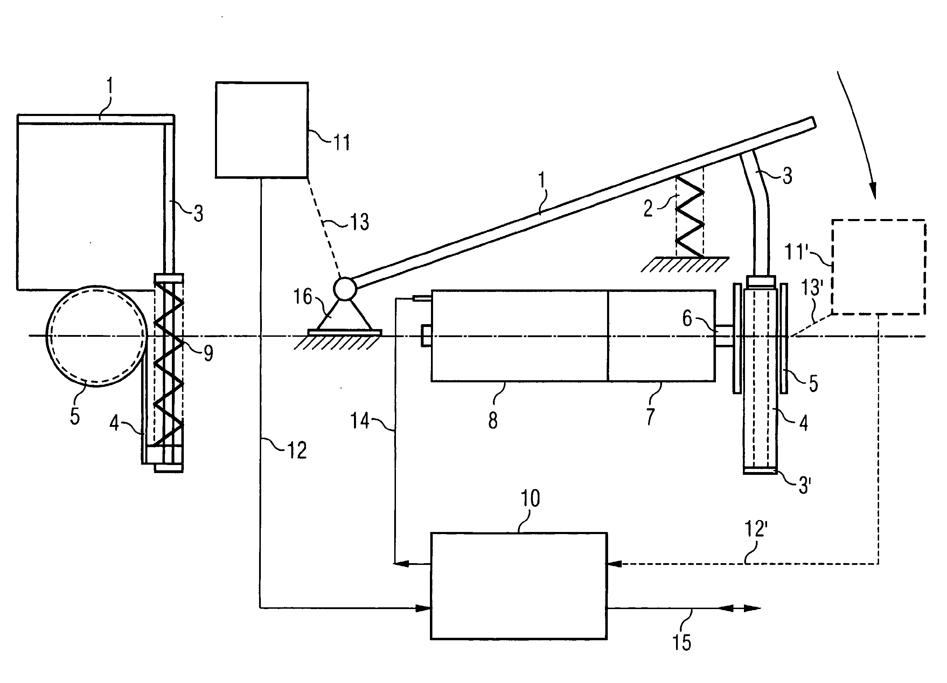

Die Erfindung wird nachfolgend anhand der Zeichnung (Fig.) näher und beispielhaft erläutert.

Fig. zeigt eine Fahrpedaleinheit mit Pedal, Rollband, Getriebe und Elektromotor in der Vorder- und Seitenansicht.

In Fig. ist eine Fahrpedaleinheit als Seitenansicht und Vorderansicht dargestellt. Die Fahrpedaleinheit besteht aus einem Pedal 1, das an einem Ende an einem Lager 16 verstellbar gelagert ist. Das Pedal 1 ist mit einer Rückstellfeder 2 verbunden. Diese Rückstellfeder 2 bewirkt die Rückstellung des Pedals 1 in die Ausgangslage, sofern keine Kraft mehr auf das Pedal 1 ausgeübt wird. An dem Pedal 1 ist ein Koppelelement 3 angeordnet, das mit einem Sicherheitselement 9 verbunden ist. Das Koppelelement 3 ist dabei als Koppelstange ausgeführt. Als Sicherheitselement 9 ist hier ein Überhubelement dargestellt, in welchem eine Feder vorgespannt ist. An dem dem Pedal 1 abgewandten Ende 3' des Koppelelements 3 ist ein Rollband 4 befestigt, das mit seinem anderen Ende an einer Wickeltrommel 5 fixiert ist. Die Wickeltrommel 5 ist über eine Drehachse 6 mit einem Getriebe 7 verbunden, das als Reibradgetriebe ausgeführt ist und das an einen Elektromotor 8 angeschlossen ist. Wird das Pedal 1 durch eine Trittbewegung mit einer Kraft beaufschlagt, so neigt es sich zusammen mit dem Koppelelement 3 gegen die Kraft der Rückstellfeder 2 nach unten, was direkt zur Folge hat, dass das Rollband 4 abgewickelt wird. An einer bestimmten Position des Pedals 1 ist es nun erwünscht, dass dem weiteren Durchtreten des Pedals 1 ein größerer Trittwiderstand entgegenwirkt. An dieser Position des Pedals 1 ist dann das Rollband 4 straff gespannt und der Elektromotor 8 beginnt sich in der Richtung zu drehen, die der Trittbewegung entgegenwirkt. Durch den erhöhten Trittwiderstand wird der Fahrer über die gegenwärtige Geschwindigkeit des Fahrzeugs zusätzlich informiert. Die gegenwärtige Position des Pedals 1 wird dabei von einem Positionssensor 11 erfaßt, der über eine Leitung 13 direkt mit dem Lager 16 des Pedals 1 in Verbindung steht. Über die Leitung 12 wird die Information über die Position des Pedals 1 vom Positionssensor 11 dem Steuergerät 10 zugeführt. Über die Leitung 14 ergeht nun vom Steuergerät 10 die erforderliche Information über das Einschalten und die Leistung direkt an den Elektromotor 8. Die Position des Pedals 1 kann jedoch auch vorteilhaft über einen anderen Positionssensor 11' erfaßt werden, der über eine Leitung 13' direkt mit der Wickeltrommel 5 in Verbindung steht. Über die Leitung 12' wird die Information über die Position des Pedals direkt dem Steuergerät 10 weitergeleitet, das dann die entsprechenden Betriebsparameter des Elektromotors 8 über die Leitung 14 an den Elektromotor 8 weitergibt. In besonders vorteilhafter Weise wird das Getriebe 7 als Planetenrad-Reibgetriebe ausgebildet.

Sollte es im Betrieb zu einem Ausfall des Elektromotors 8 kommen, so muß gewährleistet sein, dass das Pedal 1 weiterhin in Pfeilrichtung in seiner Position verändert werden kann. In diesem Notfall kommt dann das Sicherheitselement 9 zum Einsatz, das in besonders vorteilhafter Weise als Überhubelement angeordnet ist. Die Kraft, die dann erforderlich ist, das Pedal 1 gegen die Kraft des Überhubelements nach unten zu drücken, muß dabei so eingestellt werden, dass sie kleiner ist als diejenige Kraft, die für das Reißen des dann gespannten Rollbandes 4 erforderlich ist. Wird sie beim Treten aufgewendet, läßt sich das Pedal 1 auch bei ausgefallenem Elektromotor 8 entgegen der Kraft des Überhubelements nach unten bewegen. Über die Leitung 15 können weitere Informationen vom Steuergerät 10 zur Steuerung des Motors ausgetauscht werden.

## Patentansprüche

1. Fahrpedaleinheit, bestehend aus einem Pedal (1), einer mit dem Pedal (1) verbundenen Rückstellfeder (2), einem an dem Pedal (1) angeordneten Koppelelement (3), das mit einem Sicherheitselement (9) verbunden ist, und an dem an seinem dem Pedal (1) abgewandten Ende (3') ein Rollband (4) angeordnet ist, das an einer Wickeltrommel (5) befestigt ist, die über eine Drehachse (6) mit einem Getriebe (7) verbunden ist, das an einem Elektromotor (8) angeschlossen ist, **dadurch gekennzeichnet, dass** als Getriebe (7) ein Reibradgetriebe angeordnet ist.

2. Fahrpedaleinheit nach Anspruch 1, **dadurch gekennzeichnet, dass** als Reibradgetriebe ein Planetenradgetriebe angeordnet ist.

3. Fahrpedaleinheit nach Anspruch 1 oder Anspruch 2, **dadurch gekennzeichnet, dass** als Sicherheitselement(9) ein Überhubelement angeordnet ist.

4. Fahrpedaleinheit nach einem der Ansprüche 1 bis 3, **dadurch gekennzeichnet, dass** der Elektromotor (8) mit einem Steuergerät (10) zur Leistungssteuerung verbunden ist.

5. Fahrpedaleinheit nach Anspruch 4, **dadurch gekennzeichnet, dass** das Steuergerät (10) mit einem Positionssensor (11) in Verbindung steht, der direkt die Position des Fahrpedals (1) erfaßt.

6. Fahrpedaleinheit nach Anspruch 4, **dadurch gekennzeichnet, dass** das Steuergerät (10) mit einem anderen Positionssensor (11') in Verbindung steht, der direkt die Position der Wickeltrommel (5) erfaßt.

7. Fahrpedaleinheit nach einem der Ansprüche 1 bis 6, **dadurch gekennzeichnet, dass** als Elektromotor (8) ein schräg genuteter Elektromotor eingesetzt wird.

## Claims

1. Accelerator pedal unit, composed of a pedal (1), a restoring spring (2) which is connected to the pedal (1), a coupling element (3) which is arranged on the pedal (1) and which is connected to a securing element (9) and on which, at its end (3') facing away from the pedal (1), a roller band (4) is arranged, said roller band (4) being attached to a winding drum (5) which is connected via a rotational axis (6) to a gear mechanism (7) which is connected to an electric motor (8), **characterized in that** a friction gear mechanism is arranged as a gear mechanism (7).

2. Accelerator pedal unit according to Claim 1, **characterized in that** a planetary gear mechanism is arranged as a friction gear mechanism.

3. Accelerator pedal unit according to Claim 1 or 2, **characterized in that** an excess travel element is arranged as a safety element (9).

4. Accelerator pedal unit according to one of Claims 1 to 3, **characterized in that** the electric motor (8) is connected to a control device (10) for controlling the power.

5. Accelerator pedal unit according to Claim 4, **characterized in that** the control device (10) is connected to a position sensor (11) which directly senses the position of the accelerator pedal (1).

6. Accelerator pedal unit according to Claim 4, **characterized in that** the control device (10) is connected to another position sensor (11') which directly senses the position of the winding drum (5).

7. Accelerator pedal unit according to one of Claims 1 to 6, **characterized in that** the electric motor (8) used is an obliquely grooved electric motor.

## Revendications

1. Module de pédale d'accélérateur, composé d'une pédale (1), d'un ressort de rappel (2) lié à la pédale (1), d'un élément de couplage (3), qui est monté sur la pédale (1) et qui est lié à un élément de sécurité (9) et sur lequel est fixé, sur son extrémité (3') opposée à la pédale (1), un ruban enroulable (4) arrimé à un cylindre enrouleur (5), lequel est lié, par l'intermédiaire d'un axe rotatif (6) à une transmission (7) couplée à un moteur électrique (8), **caractérisé en ce que**, en tant que transmission (7), une transmission à friction est mise en oeuvre.

2. Module de pédale d'accélérateur selon la revendication 1, **caractérisé en ce que**, en tant que transmission à friction, une transmission à pignons satellites est mise en oeuvre.

3. Module de pédale d'accélérateur selon la revendication 1 ou la revendication 2, **caractérisé en ce que**, en tant qu'élément de sécurité (9), un élément à dépassement de course est mis en oeuvre.

4. Module de pédale d'accélérateur selon l'une des revendications 1 à 3, **caractérisé en ce que** le moteur électrique (8) est relié à un appareil de commande (10) pour le contrôle de sa puissance.

5. Module de pédale d'accélérateur selon la revendication 4, **caractérisé en ce que** l'appareil de commande (10) est en liaison avec un capteur de position (11) qui détecte directement la position de la pédale d'accélérateur (1).

6. Module de pédale d'accélérateur selon la revendication 4, **caractérisé en ce que** l'appareil de commande (10) est en liaison avec un autre capteur de position (11') qui détecte directement la position du cylindre enrouleur (5).

7. Module de pédale d'accélérateur selon l'une des revendications 1 à 6, **caractérisé en ce que**, en tant que moteur électrique (8), un moteur électrique à encoches obliques est mis en oeuvre.
